(19) Europäisches Patentamt
European Patent Office
Office européen des brevets

(11) Veröffentlichungsnummer: **0 226 592 B1**

(12) # EUROPÄISCHE PATENTSCHRIFT

(45) Veröffentlichungstag der Patentschrift: **06.09.89**

(51) Int. Cl.⁴: **C 09 K 19/42**

(21) Anmeldenummer: **86901864.8**

(22) Anmeldetag: **19.03.86**

(86) Internationale Anmeldenummer: **PCT/EP 86/00158**

(87) Internationale Veröffentlichungsnummer: **WO 86/05799 (09.10.86** Gazette **86/22)**

(54) **FLÜSSIGKRISTALL-PHASE.**

(30) Priorität: **25.03.85 DE 3510733 U**

(43) Veröffentlichungstag der Anmeldung: **01.07.87 Patentblatt 87/27**

(45) Bekanntmachung des Hinweises auf die Patenterteilung: **06.09.89 Patentblatt 89/36**

(84) Benannte Vertragsstaaten: **CH DE FR GB LI**

(56) Entgegenhaltungen:
**GB-A- 2 067 586**
**GB-A- 2 080 561**
**GB-A- 2 098 986**

**Die Akte enthält technische Angaben, die nach dem Eingang der Anmeldung eingereicht wurden und die nicht in dieser Patentschrift enthalten sind.**

(73) Patentinhaber: **MERCK PATENT GESELLSCHAFT MIT BESCHRÄNKTER HAFTUNG, Frankfurter Strasse 250 Postfach 4119, D-6100 Darmstadt (DE)**

(72) Erfinder: **SCHEUBLE, Bernhard, AM Grenzweg 18, D-6146 Alsbach (DE)**
Erfinder: **WEBER, Georg, Wilhelm-Leuschner-Strasse 38, D-6106 Erzhausen (DE)**

EP 0 226 592 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft flüssigkristalline Phasen (FK-Phasen) mit niedriger Viskosität, breiten nematischen Phasen und geringer Temperaturabhängigkeit der Schwellenspannung.

Sie betrifft insbesondere FK-Phasen zur Verwendung in FK-Azeigeelementen des verdrillt nematischen Typs, die für den Multiplexbetrieb geeignet sind bzw. in SBE-Anzeigen.

Für Flüssigkristall-Anzeigeelemente (FK-Anzeigeelemente) werden in zunehmendem Maße die Eigenschaften nematischer oder nematisch-cholesterischer flüssigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle, dem SBE-Effekt oder dem cholesterisch-nematischen Phasenübergang.

Für die technische Anwendung dieser Effekte in elektrooptischen Bauelementen werden flüssigkristalline Phasen benötigt, die einer Vielzahl von Anforderungen genügen müssen. Besonders wichtig sind hier die chemische Beständigkeit gegenüber Feuchtigkeit, Luft und pysikalischen Einflüssen wie Wärme, Strahlung im infraroten, sichtbaren und ultravioletten Bereich und elektrische Gleich- und Wechselfelder. Ferner wird von technisch verwendbaren flüssigkristallinen Dielektrika eine flüssigkristalline Mesophase in einem geeigneten Temperaturbereich und eine möglichst niedrige Viskosität bei Raumtemperatur gefordert. Schließlich dürfen sie im Bereich des sichtbaren Lichtes keine Eigenabsorption aufweisen, d.h., sie müssen farblos sein.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis zwanzig, vorzugsweise drei bis fünfzehn, Verbindungen hergestellt, um als flüssigkristalline Phasen verwendbare Substanzen zu erhalten. Hierzu mischt man gewöhnlich mindestens eine Verbindung mit niedrigem Schmelz- und Klärpunkt. Hierbei wird normalerweise ein Gemisch erhalten, dessen Schmelzpunkt unter dem der niedriger schmelzenden Komponente liegt, während der Klärpunkt zwischen den Klärpunkten der Komponenten liegt. Optimale Phasen lassen sich jedoch auf diese Weise nicht leicht herstellen, da die Komponenten mit den hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verlängert.

Der Erfindung liegt die Aufgabe zugrunde, flüssigkristalline Phasen herzustellen, die eine nematische Phase im geforderten Temperaturbereich aufweisen, in Flüssigkristallzellen bei Raumtemperatur ausreichend kurze Schaltzeiten ermöglichen, geringe Temperaturabhängigkeit der Schwellenspannung aufweisen und eine außerordentlich hohe chemische Stabilität aufweisen.

Es ist bereits eine große Anzahl flüssigkristalliner Phasen auf der Basis einer Vielzahl von Verbindungen im Handel. Es besteht jedoch immer noch ein großer Bedarf nach flüssigkristallinen Phasen mit hohen Klärpunkten, niederen Schmelzpunkten, niedriger Viskosität (und damit kurzen Schaltzeiten), geringer Temperaturabhängigkeit der Schwellenspannung und hoher chemischer Stabilität, die sich für den Multiplexbetrieb eignen. Die derzeit im Handel erhältlichen FK-Phasen enthalten im Regelfall beträchtliche Mengen an Esterverbindungen, z.B. der Formel

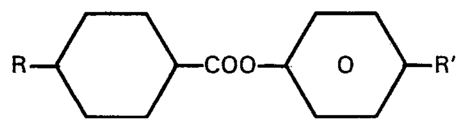

worin R n-Alkyl oder n-Oxaalkyl und R' n-Alkyl, n-Alkoxy, n-Oxaalkyl oder CN bedeutet. Derartige FK-Phasen sind in GB-A-2 067 586 beschrieben.

Es wurde nun gefunden, daß Flüssigkristallphasen mit besonders günstigen Kombinationen von Materialeigenschaften, insbesondere außerordentlich hoher chemischer Stabilität und besonders guten Multiplexeigenschaften erhalten werden,
wenn sie mindestens eine Komponente der Formel I

$R^1$-Cy-Ph-$R^2$ I

worin
- $R^1$ Alkyl mit 1 bis 12 C-Atomen,
- $R^2$ Alkyl, Alkoxy oder Alkanoyloxy mit jeweils 1 bis 12 C-Atomen,
- Cy trans-1,4-Cyclohexylen und
- Ph 1,4-Phenylen bedeutet,

mindestens eine Komponente der Formel II

$R^3$-Cy-$Z^1$-Q-$Z^2$-Phe-$A^o$-$R^4$ II

worin
- $R^3$ und $R^4$ jeweils Alkyl mit 1 bis 12 C-Atomen,
- Cy trans 1,4-Cyclohexylen,
- $Z^1$ und $Z^2$ jeweils unabhängig voreinander -CO-O-, -O-CO-, $-CH_2CH_2-$ oder eine Einfachbindung,
- Q Phe oder Cy,
- $A^o$ trans-1,4-Cyclohexylen, trans-1,3- Dioxan-2,5-diyl oder eine Einfachbindung und
- Phe jeweils unsubstituiertes oder durch ein Fluor substituiertes 1,4-Phenylen bedeutet,

mindestens eine Komponente ausgewählt aus den Verbindungen der Formeln IIIa und IIIb

$R^5$-$(Cy)_m$-Pyr-Phe-$R^6$ IIIa

$R^5$-$(Cy)_m$-$A^1$-Pyr-$R^6$ IIIb

worin
- $R^5$ jeweils Alkyl mit 1 bis 12 C-Atomen,

$R^6$ Alkyl, Alkoxy oder Alkanoyloxy mit jeweils 1 bis 12 C-Atomen,
m 0 oder 1,
Pyr Pyrimidin-2,5-diyl oder Pyridin-2,5-diyl und
$A^1$ Phe oder Cy

bedeutet und Cy und Phe die angegebenen Bedeutungen haben, und/oder

mindestens eine Komponente ausgewählt aus den Verbindungen der Formeln IVa und IVb

$R^7$-Dio-Phe-CN IVa

$R^7$-$A^o$-Phe-NCS IVb

worin $R^7$ jeweils Alkyl mit 1 bis 12 C-Atomen,
Dio trans-1,3-Dioxan-2,5-diyl,
$A^o$ -Cy-, -Dio-, -Cy-Phe-, -Cy-Cy-,-Cy-Ph-CO-O- oder -Cy-$CH_2$-$CH_2$- bedeutet,
und Dio, Cy und Phe die angegebene Bedeutung haben, enthalten.

Vorzugsweise enthalten die erfindungsgemäßen Phasen zusätzlich mindestens eine Komponente ausgewählt aus den Verbindungen der Formeln Va und Vb,

$R^8$-Cy-$(Phe)_n$-CN Va

$R^8$-Cy-Cy-$(Phe)_n$-CN Vb

worin $R^8$ jeweils Alkyl mit 1 bis 12 C-Atomen,
n 1 oder 2 bedeutet und
Cy und Phe jeweils die angegebenen Bedeutungen haben,

und/oder mindestens eine Komponente der Formel VI,

$R^9$-Cy-$A^1$-Z-$A^2$-$R^{10}$ VI

worin $R^9$ Alkyl mit 1 bis 12 C-Atomen,
$R^{10}$ Alkyl oder Alkoxy jeweils 1 bis 12 C-Atomen oder CN,
$A^1$ und $A^2$ jeweils Cy oder Phe und
Z -CO-O-, -O-CO- oder -$CH_2CH_2$-
bedeutet.

Gegenstand der Erfindung sind somit die oben beschriebenen Flüssigkristallphasen, die gegebenfalls auch zwei oder mehr pleochroitische Farbstoffe enthalten können sowie die Verwendung dieser Phasen in Flüssigkristallanzeigeelementen.

Ferner sind Gegenstand der Erfindung Flüssigkristallanzeigeelemente, die solche Phasen enthalten.

Prinzipiell können als Farbstoffe alle für Guest-Host-Mischungen geeigneten pleochroitischen Farbstoffe verwendet werden. Die wichtigsten dieser Farbstoffe gehören den Klassen der Antrachinon-, Naphtochinon-, Azo-, Indigo-, und/oder Perylen-Farbstoffe an.

Diese sind in reicher Vielfalt in der Literatur beschrieben. Der Fachmann kann sich die für den jeweiligen Anwendungszweck am besten geeigneten Farbstoffe ohne Schwierigkeiten heraussuchen. So sind z.B. Anthrachinonfarbstoffe beschrieben in EP 34 832, EP 44 893, EP 48 583, EP 54 217, EP 56 492, EP 59 036, GB 20 65 158, GB 20 65 695, GB 20 81 736, GB 20 82 196, GB 20 94 822, GB 20 94 825, JP-OS 55-123673, JP-OS 56-112 967, JP-OS 57 165 456, JP-OS 50-020 355, DE 30 17 877, DE 30 40 102, DE 30 48 552, DE 31 00 533, DE 31 15 147, DE 31 15 762, DE 31 50 803, DE 32 01 120 und DE 33 09 045, Naphthochinonfarbstoffe beschrieben in DE 31 26 108 und 32 02 761, Azofarbstoffe in EP 43 904, DE 31 23 519, DE 32 45 751, DE 33 09 048, FCT WO 82/2054, GB 20 79 770, JP-OS 56-57 850, JP-OS 56-104 984, JP-PS 55-052 375, JP-OS 59-096 171, JP-OS 59-093 776, US 4,308,161, US 4,308,162, US 4,340,937, T. Uchida, C. Shishido, H. Seki und M. Wada: Mol. Cryst. Liq. Cryst. 39, 39-52 (1977) und H. Seki, C. Shishido, S. Yasui und T. Uchida: Jpn. J. Appl. Phys. 21, 191-192 (1982) und Perylene beschrieben in EP 60 895, EP 68 427 und PCT WO 82/1191.

Durch geeignete Wahl der Farbstoffkomponenten und der relativen Farbstoffkonzentrationen können die erfindungsgemäßen Guest-Host-Systeme den verschiedensten Anwendungsbereichen angepaßt werden.

Die einzelnen Verbindungen der Formeln I-VI der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Alkoxy bzw. Alkanoyloxy bedeutet in den vorstehenden Formeln -O-Alkyl bzw. -O-CO-Alkyl. Alkyl bedeutet in allen Formeln eine garadkettige Alkylgruppe, worin auch eine nicht endständige oder zwei nicht benachbarte und nicht endständige $CH_2$-Gruppen durch -O- oder -CH=CH- ersetzt sein könnten.

Alkyl bedeutet vorzugsweise Methyl, Ethyl, n-Propyl, n-Butyl, n-Pentyl, n-Hexyl, n-Heptyl, n-Octyl, n-Nonyl, n-Alkyoxymethyl oder n-Alkoxyethyl mit jeweils vorzugsweise 2 bis 7 C-Atomen oder trans-Alkenyl mit 3 bis 7 C-Atomen.

Wenn die Alkylgruppen der Komponenten der Formel I bis VI 3 oder mehr Kohlenstoffatome enthalten, können diese in gerader oder verzweigter Kette angeordnet sein. In den erfindungsgemäßen Phasen werden jedoch keine Komponenten verwendet, die mehr als eine verzweigte Alkylgruppe enthalten. Derartige verzweigte Alkylgruppen enthalten im Rahmen der vorliegenden Erfindung nicht mehr als eine Kettenverzweigung; vorzugsweise handelt es sich dabei um eine Methylgruppe in 1- oder 2-Stellung des Kohlenstoffgerüstes, so daß als verzweigte Alkylgruppen insbesondere in Frage kommen: 2-Methylpropyl, 2-Methylbutyl, 1-Methylpentyl, 2-Methylpentyl, 1-Methylhexyl. In der Regel enthalten die erfindungsgemäßen flüssigkristallinen Dielektrika nur eine Komponente mit einem verzweigtkettigen Alkylrest, um gewünschtenfalls optische Aktivität zu induzieren. Zu diesem Zweck werden normalerweise nicht mehr als 10 Gewichtsprozent,

vorzugsweise 0,5 bis 3 Gewichtsprozent einer Komponente mit einem verzweigten Alkylrest zugefügt. Im übrigen werden als Komponenten der erfindungsgemäßen Phase solche Verbindungen der Formel I bis IV bevorzugt verwendet, in denen die Alkylreste geradkettig sind, also Methyl, Ethyl, n-Propyl, n-Butyl, n-Pentyl, n-Hexyl, n-Heptyl, n-Octyl, n-Nonyl, n-Decyl, n-Undecyl und n-Dodecyl bedeuten.

A ist vorzugsweise Cy. $Z^1$ und $Z^2$ in Formel II bedeuten vorzugsweise jeweils eine Einfachbindung. Ferner bevorzugt sind Verbindungen der Formel II, worin eine der Gruppen $Z^1$ und $Z^2$ $-CH_2CH_2-$ bedeutet und die andere Gruppe $-CH_2-CH_2-$, -CO-O- oder -O-CO- ist. Q ist vorzugsweise Phe.

Die erfindungsgemäßen FK-Phasen enthalten vorzugsweise 5 bis 38, insbesondere 8 bis 23% an einer oder mehreren Komponenten der Formel I. Besonders bevorzugt sind erfindungsgemäße FK-Phasen enthaltend 10 bis 22% an einer oder mehreren Komponenten der Formel I. $R^1$ ist vorzugsweise n-Alkyl oder n-(trans)-Alkenyl mit 2 bis 7, insbesondere mit 3 bis 5, C-Atomen oder eine Oxaalkylgruppe mit 2 bis 6 C-Atomen. $R^2$ ist vorzugsweise n-Alkyl oder n-Alkoxy mit jeweils 1 bis 5 C-Atomen. Vorzugsweise enthalten die erfindungsgemäßen FK-Phasen mindestens eine Verbindung der Formel I, worin $R^2$ n-Alkoxy bedeutet.

Die erfindungsgemäßen FK-Phasen enthalten vorzugsweise 5 bis 45, insbesondere 5-35% an einer oder mehreren Komponenten der Formel II. Besonders bevorzugt sind FK-Phasen enthaltend 12 bis 27% an einer oder mehreren Komponenten der Formel II. $R^3$ und $R^4$ sind jeweils vorzugsweise unabhängig voneinander n-Alkyl oder n-Oxaalkyl mit jeweils 2 bis 7, insbesondere 3 bis 5, C-Atomen. Vorzugsweise enthalten die FK-Phasen mindestens eine Verbindung der Formel II, worin $A^o$ trans-1,4-Cyclohexylen bedeutet und/oder eine Gruppe Phe 2-Fluor-1,4-phenylen und die andere Gruppe Phe 1,4-Phenylen bedeutet.

Formel II umfaßt bevorzugt Verbindungen der Teilformeln IIa bis m:

| | |
|---|---|
| $R^3$-Cy-Ph-Ph-$R^4$ | IIa |
| $R^3$-Cy-Cy-Phe-$R^4$ | IIb |
| $R^3$-Cy-Ph-Ph-Cy-$R^4$ | IIc |
| $R^3$-Cy-Phe-Ph-$R^4$ | IId |
| $R^3$-Cy-Phe-Ph-Cy-$R^4$ | IIe |
| $R^3$-Cy-$CH_2CH_2$-Phe-Phe-$R^4$ | IIf |
| $R^3$-Cy-$CH_2CH_2$-Phe-Phe-$CH_2CH_2$-Cy-$R^4$ | IIg |
| $R^3$-Cy-$CH_2CH_2$-Phe-Phe-CY-$R^4$ | IIh |
| $R^3$-Cy-COO-Ph-Ph-$R^4$ | IIi |
| $R^3$-Cy-$CH_2CH_2$-Phe-$CH_2CH_2$-Phe-Cy-$R^4$ | IIj |
| $R^3$-Cy-$CH_2CH_2$-Cy-Phe-$R^4$ | IIk |
| $R^3$-Cy-$CH_2CH_2$-Cy-Phe-Cy-$R^4$ | II*l* |
| $R^3$-C-Phe-COO-Phe-Cy-$R^4$ | IIm |

Vorzugsweise enthalten die erfindungsgemäßen FK-Phasen sowohl mindestens eine Verbindung der Formel II, worin $A^o$ eine Einfachbindung bedeutet, als auch mindestens eine Verbindung der Formel II, worin $A^o$ trans-1,4-Cyclohexylen bedeutet.

Die erfindungsgemäßen FK-Phasen enthalten vorzugsweise 10 bis 45, insbesondere 20-35%, an einer oder mehreren Komponenten der Formel III. Besonders bevorzugt sind FK-Phasen enthaltend 21 bis 33% an einer oder mehreren Komponenten der Formel III . m ist vorzugsweise 0. $R^5$ ist vorzugsweise n-Alkyl mit 3 bis 12, insbesondere 6 bis 9 C-Atomen. $R^6$ ist vorzugsweise n-Alkoxy oder n-Alkyl mit 1 bis 12 C-Atomen. Vorzugsweise enthalten FK-Phasen mindestens drei, insbesondere mindestens fünf, Verbindungen der Formel III.

Formel IIIa umfaßt bevorzugt Verbindungen der Teilformeln IIIaa und IIIab,

| | |
|---|---|
| $R^5$-Pyr-Phe-$R^6$ | IIIaa |
| $R^5$-Cy-Pyr-Phe-$R^6$ | IIIab |

wovon die Verbindungen der Formel IIIaa besonders bevorzugt sind. Pyr ist vorzugsweise Pyramidin-2,5-diyl. $R^5$ ist vorzugsweise geradkettiges Alkyl mit 3 bis 9 C-Atomen. $R^6$ ist vorzugsweise geradkettiges Alkyl oder Alkoxy mit 2 bis 9 C-Atomen.

Formel IIIb umfaßt bevorzugte Verbindungen der Teilformeln IIIba, IIIbb und IIIbc,

| | |
|---|---|
| $R^5$-Cy-Pyr-$R^6$ | IIIba |
| $R^5$-Cy-Phe-Pyr-$R^6$ | IIIbb |
| $R^5$-Cy-Cy-Pyr-$R^6$ | IIIbc |

wovon die Verbindungen der Formeln IIIbb und IIIbc besonders bevorzugt sind. $R^5$ und $R^6$ bedeuten jeweils bevorzugt Alkyl mit 2 bis 9 C-Atomen.

Die erfindungsgemäßen FK-Phasen enthalten vorzugsweise 5 bis 45, insbesondere 14 bis 38%, an einer oder mehreren Komponenten der Formel IV. Besonders bevorzugt sind FK-Phasen enthaltend 21 bis 33% an einer oder mehreren Komponenten der Formel IV. $R^7$ ist vorzugsweise n-Alkyl mit 2 bis 7, insbesondere 2 bis 5, C-Atomen.

Formel IVb umfaßt Verbindungen der Teilformeln IVba bis IVbf

| | |
|---|---|
| $R^7$-Cy-Phe-NCS | IVba |
| $R^7$-Dio-Phe-NCS | IVbb |
| $R^7$-Cy-Phe-Phe-NCS | IVbc |
| $R^7$-Cy-Cy-Phe-NCS | IVbd |
| $R^7$-Cy-$CH_2CH_2$-Phe-NCS | IVbe |
| $R^7$-Cy-Ph-COO-Phe-NCS | IVbf |

wovon Verbindungen der Formel IVba, IVbc, IVbd, und IVbe besonders bevorzugt sind. $R^7$ ist vorzugsweise geradkettiges Alkyl, Alkoxy oder (trans)-Alkenyl mit vorzugsweise 2 bis 7 C-Atomen. Phe ist vorzugsweise 1,4-Phenylen.

Bevorzugt sind erfindungsgemäße Phasen, die gleichzeitig Verbindungen der Formeln I, II, III (a und/oder b) und IV (a und/oder b) enthalten. Vorzugsweise enthalten diese Phasen Verbindungen der Formel IVa. Weiterhin bevorzugt sind Phasen, die gleichzeitig Verbindungen der Formeln I, II und IVb enthalten, wobei diese Phasen vorzugsweise drei- und vierkernige Verbindungen der Formeln II enthalten (d.h. $A^o$ ist in einer oder mehreren Verbindungen der Formel II eine Einfachbindung und in einer oder mehreren Verbindungen der Formel II Cy oder Dio, vorzugsweise Cy).

Vorzugsweise liegen die Verhältnisse der Gewichtsanteile der Komponenten der Formeln I bis IV in den erfindungsgemäßen FK-Phasen in den im folgenden angegebenen Bereichen.

I : II = 0,63 - 1,53
I : III = 0,67 - 0,82
I : IV = 0,71 - 1,64
II : III = 0,45 - 1,25
II : IV = 0,48 - 2,50
III : IV = 0,90 - 2,35

Ferner bevorzugt sind erfindungsgemäße FK-Phasen enthaltend mindestens eine Komponente der Formel Va und/oder Vb, worin $R^8$ vorzugsweise n-Alkyl mit 2 bis 7 C-Atomen bedeutet und Phe 1,4-Phenylen oder 3-Fluor-1,4-Phenylen ist.

Der Anteil dieser Verbindung(en) liegt vorzugsweise im Bereich von 4 bis 15%. Verbindungen der Formel Va sind bevorzugt.

Ferner bevorzugt sind erfindungsgemäße FK-Phasen enthaltend mindestens eine Komponente der Formel VI, worin $R^9$ vorzugsweise n-Alkyl oder n-Oxaalkyl mit 2 bis 5 C-Atomen, $R^{10}$ vorzugsweise n-Alkyl, n-Alkoxy oder n-Oxaalkyl mit jeweils 2 bis 7 C-Atomen oder CN bedeutet. $A^1$ ist vorzugsweise trans-1,4-Cyclohexylen oder 1,4-Phenylen. $A^2$ ist vorzugsweise trans-1,4-Cyclohexylen oder 3-Fluor-1,4-Phenylen. Z ist vorzugsweise -CO-O- oder $-CH_2CH_2-$. Der Anteil dieser Verbindungen beträgt vorzugsweise 3 bis 15%.

Die Herstellung der erfindungsgemäßen Phasen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Wenn dabei eine Temperatur oberhalb des Klärpunkts des Hauptbestandteils gewählt wird, kann die Vollständigkeit des Löservorgangs besonders leicht beobachtet werden.

Es ist jedoch auch möglich, Lösungen der Komponenten in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronethern (vgl. z.B. I. Haller et al., Mol. Cryst. Liq. Cryst. Band 24, Seiten 249-258, (1973) zur Verbesserung der Leitfähigkeit oder Substanzen zur Veränderung der dielektrischen Anisotropie, der Viskosität und/oder der Orientierung der nematischen Phasen zugesetzt werden.

Derartige Substanzen sind z.B. in den DE-OS 2 209 127, 2 240 864, 2 321 632, 2 338 281, 2 450 088, 2 637 430, 2 853 728 und 2 902 177 beschrieben.

Die folgenden Beispiele sollen die Erfindungen erläutern, ohne sie zu begrenzen. In den Beispielen sind Schmelzpunkt und Klärpunkt einer flüssigkristallinen Substanz in Grad Celsius angegeben. Die Prozentzahlen beziehen sich auf die Gewichtsprozente.

*Beispiel 1*

Eine flüssigkristalline Phase aus

6% 2-p-Cyanphenyl-5-propyl-1,3-dioxan,
14% 2-p-Cyanphenyl-5-butyl-1,3-dioxan,
11% 2-p-Cyanphenyl-5-pentyl-1,3-dioxan,
6% p-trans-4-Ethylcyclohexyl-benzoesäure-(p-cyanphenylester)
7% p-trans-4-Pentylcyclohexyl-benzoesäure-(p-cyanphenylester)
2% p-(Pentylbenzoyloxy)-benzoesäure-(p-cyanphenylester)
18% Buttersäure-(p-trans-4-propylcyclohexylphenylester)
5% trans-1-p-Methoxyphenyl-4-propylcyclohexan,
5% 4,4'-Bis-(trans-4-pentylcyclohexyl)-2-fluorbiphenyl,
7% 2-p-Pentyloxyphenyl-5-hexylpyrimidin,
7% 2-p-Hexyloxyphenyl-5-hexylpyrimidin,
7% 2-p-Heptyloxyphenyl-5-hexylpyrimidin und
7% 2-p-Nonyloxyphenyl-5-hexylpyrimidin

hat einen Klärpunkt von 65,5°, eine dielektrische Anisotropie von +10,6, eine otische Anisotropie von 0,129, eine Schwellenspannung $V_{10,0,20}$ = 1,5 Volt und ein $K_3/K_1$ von 0,92.

*Beispiel 2*

Eine flüssigkristalline Phase aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
6% 4-(trans-4-Pentylcyclohexyl)-4'-(trans-4-propylcyclohexyl)-biphenyl)
4% 4,4'-Bis-(trans-4-pentylcyclohexyl)-biphenyl,
5% 4,4'-Bis-(trans-4-pentylcyclohexyl)-2-fluorbiphenyl,
6% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Nonyloxyphenyl-5-heptylpyrimidin,
5% 2-p-Heptyloxyphenyl-5-heptylpyrimidin,
4% trans-4-Pentylcyclohexancarbonsäure-(p-trans-4-propylcyclohexylphenylester),
10% trans-1-p-Methoxyphenyl-4-propylcyclohexan und
11% trans-1-p-Propylphenyl-4-pentylcyclohexan

hat einen Schmelzpunkt von -14°, einen Klärpunkt von 68,2°, eine dielektrische Anisotropie von +7,4, eine optische Anisotropie von 0,125, eine Schwellenspannung $V_{10,0,20}$ von 2,1 Volt und $K_3/K_1$ von 0,81.

*Beispiel 3*

Eine flüssigkristalline Phase aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,

7% 2-p-Cyanphenyl-5-pentyl-1,3-dioxan,
6% 4-(trans-4-Pentylcyclohexyl)-4'-(trans-4-propylcyclohexyl)-biphenyl)
4% 4,4'-Bis-(trans-4-pentylcyclohexyl)-biphenyl,
5% 4,4'-Bis-(trans-4-pentylcyclohexyl)-2-fluorbiphenyl,
6% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Nonyloxyphenyl-5-heptylpyrimidin,
5% 2-p-Heptyloxyphenyl-5-heptylpyrimidin,
3% 4-(trans-4-Pentylcyclohexyl)-4'-(trans-4-propylcyclohexyl)-2-fluorbiphenyl,
8% trans-1-p-Methoxyphenyl-4-propylcyclohexan und
15% trans-1-p-Propylphenyl-4-pentylcyclohexan

hat einen Schmelzpunkt von -14°, keinen Phasenübergang smektisch/nematisch bis -40°, einen Klärpunkt von 64,4°, eine dielektrische Anisotropie von +7,1, eine optische Anisotropie von 0,1248, eine Schwellenspannung $V_{10,0,20}$ von 2,0 Volt und ein $K_3/K_1$ von 0,80.

*Beispiel 4*

Eine flüssigkristalline Phase aus

7% 2-p-Cyanphenyl-5-ethyl-1,3-dioxan,
11% 2-p-Cyanphenyl-5-propyl-1,3-dioxan,
11% 2-p-Cyanphenyl-5-butyl-1,3-dioxan,
9% 2-p-Cyanphenyl-5-pentyl-1,3-dioxan,
12% p-trans-4-Propylcyclohexyl-benzonitril,
6% 4,4'-Bis-(trans-4-pentylcyclohexyl)-biphenyl,
6% 4-(trans-4-Pentylcyclohexyl)-4'-(trans-4-propylcyclohexyl)-biphenyl,
8% trans-1-p-Methoxyphenyl-4-propylcyclohexan,
4% 2-p-Methoxyphenyl-5-heptylpyrimidin,
6% 2-p-Nonyloxyphenyl-5-heptylpyrimidin,
4% 2-p-Methoxyphenyl-5-nonylpyrimidin,
8% 2-p-Hexyloxyphenyl-5-nonylpyrimidin,
8% 2-p-Nonyloxyphenyl-5-nonylpyrimidin,

hat einen Klärpunkt von 62°, eine optische Anisotropie von 0,129 und eine Schwellenspannung $V_{10,0,20}$ von 1,6 Volt.

*Beispiel 5*

Eine flüssigkristalline Phase aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
10% 4-Ethyl-4'-(trans-4-penthylcyclohexyl)-biphenyl,
5% 2-p-Pentoxylphenyl-5-hexylpyrimidin,
5% 2-p-Hexoxyphenyl-5-hexylpyrimidin,
5% 2-p-Heptyloxyphenyl-5-hexylpyrimidin,
5% 2-p-Nonoxyphenyl-5-hexylpyrimidin,
5% 2-p-Heptoxyphenyl-5-heptylpyrimidin,
5% 2-p-Nonoxyphenyl-5-heptylpyrimidin,
6% 4,4'-Bis-(trans-4-pentylcyclohexyl)-2-fluorbiphenyl,
5% 4,4'-Bis-(trans-4-pentylcyclohexyl)-biphenyl,
8% trans-1-p-Methoxyphenyl-4-propylcyclohexan und
14% trans-1-p-Propylphenyl-4-pentylcyclohexan

hat einen Schmelzpunkt von -12°, einen Klärpunkt von 65°, eine dielektrische Anisotropie von +7,0, eine optische Anisotropie von 0,1249, eine Schwellenspannung $V_{10,0,20}$ von 2,0 Volt und ein $K_3/K_1$ von 0,77.

*Beispiel 6*

Eine flüssigkristalline Phase aus

8% p-trans-4-Propylcyclohexyl-benzonitril,
7% 2-p-Cyanphenyl-5-butyl-1,3-dioxan,
7% 2-p-Cyanphenyl-5-pentyl-1,3-dioxan,
12% trans-1-p-Methoxyphenyl-4-propylcyclohexan,
11% trans-1-p-Butoxyphenyl-4-propylcyclohexan,
12% 4-Ethyl-4'-(trans-4-penthylcyclohexyl)-biphenyl),
7% 4-Ethyl-4'-(trans-4-propylcyclohexyl)-biphenyl,
5% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl,
5% 4,4'-Bis-(trans-4-pentylcyclohexyl)-2-fluorbiphenyl,
4% 2-p-Methoxyphenyl-5-hexylpyrimidin,
4% 2-p-Methoxyphenyl-5-heptylpyrimidin,
4% 2-p-Heptoxyphenyl-5-heptylpyrimidin,
4% 2-p-Nonoxyphenyl-5-heptylpyrimidin und
4% 2-p-Methoxyphenyl-5-nonylpyrimidin

hat einen Schmelzpunkt von -18°, einen Klärpunkt von 85°, eine dielektrische Anisotropie von +5,7, eine optische Anisotropie von 0,1358, eine Schwellenspannung $V_{10,0,20}$ von 2,5 Volt une ein $K_3/K_1$ von 0.94.

*Beispiel 7*

Eine flüssigkristalline Phase bestehend aus

7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
13% trans-1-p-Methoxyphenyl-4-propylcyclohexan,
10% trans-1-p-Butoxyphenyl-4-propylcyclohexan,
2% 4-Nonyl-4'-(trans-4-butylcyclohexyl)-biphenyl,
11% 4-Ethyl-4'-(trans-4-pentylcyclohexyl)-biphenyl,
2% 4-Nonyl-4'-(trans-4-pentylcyclohexyl)-biphenyl,
6% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl,
4% 4,4'-Bis-(trans-4-pentylcyclohexyl)-biphenyl,
5% 4,4'-Bis-(trans-4-pentylcyclohexyl)-2-fluorbiphenyl,
4% 2-p-Methoxyphenyl-5-hexylpyrimidin,
4% 2-p-Methoxyphenyl-5-heptylpyrimidin,
5% 2-p-Heptoxyphenyl-5-heptylpyrimidin,
3% 2-p-Nonoxyphenyl-5-heptylpyrimidin und
4% 2-p-Methoxyphenyl-5-nonylpyrimidin,

hat einen Schmelzpunkt von -19°, einen Klärpunkt von 90°, eine optische Anisotropie von 0,1348, eine Schwellenspannung $V_{10,0,20}$ von 2,5 Volt und ein $K_3/K_1$ von 0,92.

*Beispiel 8*

Eine flüssigkristalline Phase bestehend aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
5% p-(5-Hexylpyrimidinyl)-phenyl-p-pentylbenzylether,
10% p-(5-Heptylpyrimidinyl)-phenyl-p-pentylbenzylether,
8% p-(5-Heptylpyrimidinyl)-phenyl-p-hexylbenzylether,
5% 4-(trans-4-Pentylcyclohexyl)-4'-(trans-4-propylcyclohexyl)-2-fluorbiphenyl,
5% 4,4'-Bis-(trans-4-pentylcyclohexyl)-2-fluorbiphenyl,
10% trans-1-p-Methoxyphenyl-4-propylcyclohexan,
5% 2-p-Methoxyphenyl-5-hexylpyrimidin,
5% 2-p-Pentoxyphenyl-5-hexylpyrimidin,
5% 2-p-Heptoxyphenyl-5-hexylpyrimidin,
5% 2-p-Methoxyphenyl-5-heptylpyrimidin,
5% 2-p-Heptoxyphenyl-5-heptylpyrimidin und
5% 2-p-Nonoxyphenyl-5-heptylpyrimidin,

hat einen Schmelzpunkt von -14°, einen Klärpunkt von 70°, eine dielektrische Anisotropie von +8,0, eine optische Anisotropie von 0,149, eine Schwellenspannung $V_{10,0,20}$ von 2,0 Volt und ein $K_3/K_1$ von 0,77.

*Beispiel 9*

Eine flüssigkristalline Phase bestehend aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
4% 4-Nonyl-4'-(trans-4-pentylcyclohexyl)-biphenyl,
11% 4-Ethyl-4'-(trans-4-pentylcyclohexyl)-biphenyl,
5% 2-p-Heptoxyphenyl-5-hexylpyrimidin,
5% 2-p-Nonoxyphenyl-5-hexylpyrimidin,
5% 2-p-Heptoxyphenyl-5-heptylpyrimidin,
5% 2-p-Nonoxyphenyl-5-heptylpyrimidin,
5% 2-p-Hexoxyphenyl-5-nonylpyrimidin,
5% 2-p-Nonoxyphenyl-5-nonylpyrimidin,
6% 4,4'-Bis-(trans-4-pentylcyclohexyl)-2-fluorbiphenyl,
6% trans-1-p-Methoxyphenyl-4-propylcyclohexan und
16% trans-1-p-Propylphenyl-4-pentylcyclohexan

hat einen Schmelzpunkt von -14°, einen Klärpunkt von 61°, eine dielektrische Anisotropie von +6,8, eine optische Anisotropie von 0,1219, eine Schwellenspannung $V_{10,0,20}$ von 2,0 Volt und ein $K_3/K_1$ von 0,75.

*Beispiel 10*

Eine flüssigkristalline Phase bestehend aus

5% 2-p-Cyanphenyl-5-ethyl-1,3-dioxan,
7% 2-p-Cyanphenyl-5-propyl-1,3-dioxan,
8% 2-p-Cyanphenyl-5-butyl-1,3-dioxan,
7% 2-p-Cyanphenyl-5-pentyl-1,3-dioxan,
7% 4-Ethyl-4'-(trans-4-pentylcyclohexyl)-biphenyl,
5% 2-p-Pentoxyphenyl-5-hexylpyrimidin,
5% 2-p-Hexoxyphenyl-5-hexylpyrimidin,
5% 2-p-Heptoxyphenyl-5-hexylpyrimidin,
5% 2-p-Heptoxyphenyl-5-heptylpyrimidin,
4% 2-p-Nonoxyphenyl-5-heptylpyrimidin,
6% 4-(trans-4-Pentylcyclohexyl)-4'-(trans-4-propylcyclohexyl)-biphenyl,
4% 4,4'-Bis-(trans-4-pentylcyclohexyl)-biphenyl,
6% 4,4'-Bis-(trans-4-pentylcyclohexyl)-2-fluorbiphenyl,
4% 4,4'-Bis-(trans-4-propylcyclohexyl)-2-fluorbiphenyl,
8% trans-1-p-Methoxyphenyl-4-propylcyclohexan und
14% trans-1-p-Propylphenyl-4-pentylcyclohexan

hat einen Schmelzpunkt von -17°, einen Klärpunkt von 78°, eine dielektrische Anisotropie von +7,0, eine optische Anisotropie von 0,1282, eine Schwellenspannung $V_{10,0,20}$ von 2,1 Volt und ein $K_3/K_1$ von 0,84.

*Beispiel 11*

Man stellt eine flüssigkristalline Phase her, bestehend aus

5% p-trans-4-(2-Oxapropyl)-cyclohexylbenzonitril,
3% p-trans-4-(3-Oxabutyl)-cyclohexylbenzonitril,
7% 2-p-Cyanphenyl-5-butyl-1,3-dioxan,
7% 2-p-Cyanphenyl-5-pentyl-1,3-dioxan,
12% trans-1-p-Methoxyphenyl-4-propylcyclohexan,
11% trans-1-p-Butoxyphenyl-4-propylcyclohexan,
12% 4-Ethyl-4'-(trans-4-pentylcyclohexyl)-biphenyl,
7% 4-Ethyl-4'-(trans-4-propylcyclohexyl)-biphenyl,
5% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl,
5% 4,4'-Bis-(trans-4-pentylcyclohexyl)-2-fluorbiphenyl,
4% 2-p-Methoxyphenyl-5-hexylpyrimidin,
4% 2-p-Methoxyphenyl-5-heptylpyrimidin,
4% 2-p-Heptoxyphenyl-5-heptylpyrimidin,
4% 2-p-Nonoxyphenyl-5-heptylpyrimidin,
4% 2-p-Ethylphenyl-5-nonylpyrimidin,

*Beispiel 12*

Man stellt eine flüssigkristalline Phase her, bestehend aus

6% 2-p-Cyanphenyl-5-propyl-1,3-dioxan,
14% 2-p-Cyanphenyl-5-butyl-1,3-dioxan,
11% 2-p-Cyanphenyl-5-pentyl-1,3-dioxan,
6% p-trans-4-Ethylcyclohexyl)-benzoesäure-(p-cyanphenylester),

7% p-trans-4-Pentylcyclohexyl)-benzoesäure-(4-cyan-3-fluorphenylester),
2% p-(p-Pentylbenzoyloxy)-benzoesäure-(p-cyanphenylester),
18% Buttersäure-(p-trans-4-propylcyclohexyl-phenylester),
5% trans-1-p-Methoxyphenyl-4-propyl-cyclohexan,
5% 4,4'-Bis-(trans-4-Pentylcyclohexyl)-2-fluorbiphenyl,
7% 2-Pentyloxyphenyl-5-hexylpyrimidin,
7% 2-Hexyloxyphenyl-5-hexylpyrimidin,
7% 2-Heptyloxyphenyl-5-hexylpyrimidin und
7% 2-Nonyloxyphenyl-5-hexylpyrimidin.

*Beispiel 13*

Eine flüssigkristalline Phase bestehend aus

5% 2-p-Cyanphenyl-5-ethyl-1,3-dioxan,
7% 2-p-Cyanphenyl-5-propyl-1,3-dioxan,
8% 2-p-Isothiocyanatophenyl-5-butyl-1,3-dioxan,
7% 2-p-Isothiocyanatophenyl-5-pentyl-1,3-dioxan,
10% 4-Ethyl -4'-(trans-4-propylcyclohexyl)-biphenyl)
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
6% 4,4'-Bis-(trans-4-pentylcyclohexyl)-2-fluorbiphenyl,
5% 4-(trans-4-Pentylcyclohexyl)-4'-(trans-4-propylcyclohexyl)-2-fluorbiphenyl,
8% 2-p-Methoxyphenyl-5-propyl-1,3-dioxan und
14% trans-1-p-Propylphenyl-4-pentylcyclohexan

hat einen Klärpunkt von 64°, eine Vislosität von 37 $mm^2$ und $K_3/K_1$ (20°) von 0,73.

*Beispiel 14*

Eine flüssigkristalline Phase bestehend aus

5% trans-1-p-Isothiocyanatophenyl-4-ethyl-cyclohexan,
7% trans-1-p-Isothiocyanatophenyl-4-propyl-cyclohexan,
8% 2-p-Isothiocyanatophenyl-5-butyl-1,3-dioxan,
7% 2-p-Isothiocyanatophenyl-5-pentyl-1,3-dioxan,
10% 4-Ethyl-4'-(trans-4-propylcyclohexyl)-biphenyl,
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
6% 4,4'-Bis-(trans-4-pentylcyclohexyl)-2-fluorbiphenyl,
5% 4-(trans-4-Pentylcyclohexyl)-4'-(trans-4-propylcyclohexyl)-2-fluorbiphenyl,
8% 2-p-Methoxyphenyl-5-propyl-1,3-dioxan und
14% trans-1-p-Propylphenyl-4-pentylcyclohexan

hat einen Klärpunkt von 66, und Viskosität von 32 $mm^2/s$ bei 20° und $K_3/K_1$ (20°) von 0,76.

*Beispiel 15*

Eine flüssigkristalline Phase bestehend aus

9% 2-p-Isothiocyanatophenyl-5-penthyl-1,3-dioxan,
7% 2-p-Isothiocyanatophenyl-5-hepthyl-1,3-dioxan,
8% 2-p-Cyanphenyl-5-butyl-1,3-dioxan,
7% 2-p-Cyanphenyl-5-pentyl-1,3-dioxan,
6% 4-(trans-4-Pentylcyclohexyl)-4'-(trans-4-propylcyclohexyl)-biphenyl,
4% 4,4'-Bis-(trans-4-pentylcyclohexyl)-biphenyl,
5% 4-4'-Bis-(trans-4-pentylcyclohexyl)-2-fluorbiphenyl,
6% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
10% 2-p-Ethoxyphenyl-5-pentyl-1,3-dioxan und
11% trans-1-p-Propylphenyl-4-pentylcyclohexan

hat einen Klärpunkt von 66°, eine Viskosität von 40 $mm^2/s$ bei 20° und $K_3/K_1$ (20°) von 0,82.

*Beispiel 16*

Eine flüssigkristalline Phase bestehend aus

9% trans-1-p-Isothiocyanatophenyl-4-pentyl-cyclohexan,
7% trans-1-p-Isothiocyanatophenyl-4-heptyl-cyclohexan,
8% 2-p-Cyanphenyl-5-propyl-1,3-dioxan,
7% 2-p-Cyanphenyl-5-pentyl-1,3-dioxan,
6% 4-(trans-4-Pentylcyclohexyl)-4'-(trans-4-propylcyclohexyl)-biphenyl,
4% 4,4'-Bis-(trans-4-pentylcyclohexyl)-biphenyl,
5% 4-4'-Bis-(trans-4-pentylcyclohexyl)-2-fluorbiphenyl,
6% 2-p-Pentyloxyphenyl-5-hexylpyrimidin,
6% 2-p-Hexyloxyphenyl-5-hexylpyrimidin,
6% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
10% 2-p-Methoxyphenyl-5-pentyl-1,3-dioxan und
11% trans-1-p-Propylphenyl-4-pentylcyclohexan

hat einen Klärpunkt von 67°, eine Viskosität von 38 $mm^2/s$ bei 20° und $K_3/K_1$ (20°) von 0,83.

*Beispiel 17*

Eine flüssigkristalline Phase bestehend aus

15% p-trans-4-Propylcyclohexylbenzonitril,
9% trans-1-p-Isothiocyanatophenyl-4-propyl-cyclohexan
5% 4-Ethyl-4'-cyanbiphenyl,
4% 4-Propyl-4'-cyanbiphenyl,
4% 4-Butyl-4'-cyanbiphenyl,

15% trans-1-p-Ethoxyphenyl-4-propylcyclohexan,
9% trans-1-p-Butoxyphenyl-4-propylcyclohexan,
9% 4-Ethyl-4'-(trans-4-propylcyclohexyl)-biphenyl,
7% 4-Ethyl-4'-(trans-4-pentylcyclohexyl)-biphenyl,
4% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl,
4% 4,4'-Bis-(trans-4-pentylcyclohexyl)-biphenyl,
5% 4,4'-Bis-(trans-4-pentylcyclohexyl)-2-fluorbiphenyl und
5% 4,4'-Bis-(trans-4-propylphenyl)-2-fluorbiphenyl

zeigt bis -40° keine smektische Phase, einen Klärpunkt von 101°, eine Viskosität von 21 mm²/s bei 20°, ein Δε von + 7,3 und eine optische Anisotropie Δn von 0,154.

*Beispiel 18*

Eine flüssigkristalline Phase bestehend aus

16% trans-1-p-Isothiocyanatophenyl-4-propylcyclohexan,
4% trans-1-p-Cyanphenyl-4-pentylcyclohexan,
18% trans-1-p-Ethylphenyl-4-propylcyclohexan,
20% trans-1-p-Methoxylphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
3% 4,4'-Bis-(trans-4-propylcyclohexyl)-2-fluorbiphenyl,
3% 4,4'-Bis-(trans-4-pentylcyclohexyl)-2-fluorbiphenyl,
6% 4-(trans-4-Pentylcyclohexyl)-4'-trans-4-p-propylphenyl)-biphenyl und
4% 4-(trans-4-Pentylcyclohexyl)-4'-(trans-4-propylcyclohexyl)-2-fluorbiphenyl

zeigt bis -40° keine smektische Phase, einen Klärpunkt von 83°, eine Viskosität von 14 mm²/s bei 20°, eine dielektrische Anisotropie Δε von + 2,7 und eine optische Anisotropie Δn von 0,132.

*Beispiel 19*

Man stellt eine flüssigkristalline Phase her bestehend aus

16% trans-1-p-Isothiocyanatophenyl-4-propylcyclohexan,
4% trans-trans-4-p-Cyanphenyl-4'-pentylcyclohexylcyclohexan,
18% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
3% 4,4'-Bis-(trans-4-propylcyclohexyl)-2-fluorbiphenyl,
3% trans-trans-4-p-Propylhexyl-4'pentylcyclohexylcyclohexan,
6% 4-(trans-4-Pentylcyclohexyl)-4'-(trans-4-propylcyclohexyl)-biphenyl und
4% 4-(trans-4-Pentylcyclohexyl)-4'-(trans-4-propylcyclohexyl)-2-fluorbiphenyl.

*Beispiel 20*

Man stellt eine flüssigkristalline Phase her bestehend aus

16% trans-1-p-Isothiocyanatophenyl-4-propylcyclohexan,
4% trans-1-p-Cyanphenyl-4-pentylcyclohexan,
18% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
3% 4,4'-Bis-(trans-4-propylcyclohexyl)-2-fluorbiphenyl,
3% trans-trans-4-(trans-4-pentylcyclohexylethyl-4'-propylcyclohexylcyclohexan,
6% 4-(trans-4-Pentylcyclohexyl)-4'-(trans-4-propylcyclohexyl)-biphenyl und
4% 4-(trans-4-Pentylcyclohexyl)-4'-(trans-4-propylcyclohexyl)-2-fluorbiphenyl.

*Beispiel 21*

Man stellt eine flüssigkristalline Phase her bestehend aus

5% 2-p-Cyanphenyl-5-ethyl-1,3-dioxan,
7% 2-p-Cyanphenyl-5-propyl-1,3-dioxan,
8% 2-p-Isothiocyantophenyl-5-butyl-1,3-dioxan,
7% 2-p-Isothiocyanatophenyl-5-pentyl-1,3-dioxan,
10% 4-Ethyl-4'-(trans-4-propylcyclohexyl)-biphenyl)
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
6% 4,4'-Bis-(trans-4-pentylcyclohexyl)-2-fluorbiphenyl,
5% 4-(trans-4-Pentylcyclohexyl)-4'-(trans-4-propylcyclohexyl)-2-fluorbiphenyl,
8% 2-p-Methoxyphenyl-5-propyl-1,3-dioxan und
14% trans-1-p-Propylphenyl-4-pentylcyclohexan.

*Beispiel 22*

Man stellt eine flüssigkristalline Phase her bestehend aus

5% 2-p-Cyanphenyl-5-ethyl-1,3-dioxan,
7% 2-p-Cyanphenyl-5-propyl-1,3-dioxan,
8% 2-p-Isothiocyanatophenyl-5-butyl-1,3-dioxan,

7% 2-p-Isothiocyanatophenyl-5-pentyl-1,3-dioxan,
10% 4-Ethyl-4'-(trans-4-propylcyclohexyl)-biphenyl)
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-(trans-4-Pentylcyclohexyl)-phenyl-5-hexylpyrimidin
5% 2-(trans, trans-4-Propylcyclohexylcyclohex-4'-yl)-5-hexylpyrimidin
6% 4,4'-Bis-(trans-4-pentylcyclohexyl)-2-fluorbiphenyl,
5% 4-(trans-4-Pentylcyclohexyl)-4'-(trans-4-propylcyclohexyl)-2-fluorbiphenyl,
8% 2-p-Methoxyphenyl-5-propyl-1,3-dioxan und
14% trans-1-p-Propylphenyl-4-pentylcyclohexan.

*Beispiel 23*

Eine flüssigkristalline Phase bestehend aus

16% p-trans-4-Propylcyclohexylbenzontril,
5 % p-trans-4-Pentylcyclohexylbenzonitril,
4% 4-Isothiocyanato-4'-(trans-4-pentylcyclohexyl)-biphenyl,
18% trans-1-p-Ethylphenyl-4-propylcylohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
5% 4-(trans-4-Pentylcyclohexyl)-4'-(trans-4-propyl-cyclohexyl)-biphenyl und
5% 5-(trans-4-Pentylcyclohexyl)-4'-(trans-4-propylcyclohexyl)-2-fluorbiphenyl

zeigt einen Klärpunkt von 30° und eine Viskosität von 15 $mm^2/s$ bei 20°.

*Beispiel 24*

Eine flüssigkristalline Phase bestehend aus

16% p-trans-4-Propylcyclohexylbenzonitril,
5% p-trans-4-Pentylcyclohexylbenzonitril,
4% trans, trans-4'-(p-Isothiocyanatophenyl)-4-propyl-cyclohexylcyclohexan,
18% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
6% 4-(trans-4-Pentylcyclohexyl)-4'-(trans-4-propyl-cyclohexyl)-biphenyl und
5% 4-(trans-4-Pentylcyclohexyl)-4'-(trans-4-propyl-cyclohexyl)-2-fluorbiphenyl

zeigt einen Klärpunkt von 80° und eine Viskosität von 14 $mm^2/s$ bei 20°.

*Beispiel 25*

Man stellt eine flüssigkristalline Phase her bestehend aus

16% p-trans-4-Propylcyclohexylbenzonitril,
5% p-trans-4-Pentylcyclohexylbenzonitril
4% 1-(p-Isothiocyanatophenyl)-2'-(trans-4-propylcyclohexyl)-ethan,
18% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
6% 4-(trans-4-Pentylcyclohexyl)-4'-(trans-4-propyl-cyclohexyl)-biphenyl und
5% 4-(trans-4-Pentylcyclohexyl)-4'-(trans-4-propyl-cyclohexyl)-2-fluorbiphenyl.

*Beispiel 26*

Man stellt eine flüssigkristalline Phase her bestehend aus

16% p-trans-4-Propylcyclohexylbenzonitril,
5% p-trans-4-Pentylcyclohexylbenzonitril,
4% p-(trans-4-Propylcyclohexyl)-benzoesäure-(p-isothiocyanatophenylester),
18% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
6% 4-(trans-4-Pentylcyclohexyl-4'-(trans-4-propyl-cyclohexyl)-biphenyl und
5% 4-(trans-4-Pentylcyclohexyl)-4'-(trans -4-propyl-cyclohexyl)-2-fluorbiphenyl.

**Patentansprüche**

1. Flüssigkristallphase, dadurch gekennzeichnet, daß sie mindestens eine Komponente der Formel I

$$R^1\text{-Cy-Ph-}R^2 \quad \text{I}$$

worin
$R^1$ Alkyl mit 1 bis 12 C-Atomen,
$R^2$ Alkyl, Alkoxy oder Alkanoyloxy mit jeweils 1 bis 12 C-Atomen,
Cy trans-1,4-Cyclohexylen und
Ph 1,4-Phenylen bedeutet,

mindestens eine Komponente der Formel II

$$R^3\text{-Cy-}Z^1\text{-Q-}Z^2\text{-Phe-}A^o\text{-}R^4 \quad \text{II}$$

worin
$R^3$ und $R^4$ jeweils Alkyl mit 1 bis 12 C-Atomen,
Cy trans 1,4-Cyclohexylen,

| | |
|---|---|
| $Z^1$ und $Z^2$ | jeweils unabhängig voreinander -CO-O-, -O-CO-, $-CH_2CH_2-$ oder eine Einfachbindung, |
| Q | Phe oder Cy, |
| A° | trans-1,4-Cyclohexylen, trans-1,3- Dioxan-2,5-diyl oder eine Einfachbindung und |
| Phe | jeweils unsubstituiertes oder durch ein Fluor substituiertes 1,4-Phenylen bedeutet, |

mindestens eine Komponente ausgewählt aus den Verbindungen der Formeln IIIa und IIIb

$R^5-(Cy)_m-Pyr-Phe-R^6$ IIIa

$R^5-(Cy)_m-A^1-Pyr-R^6$ IIIb

| | | |
|---|---|---|
| worin | $R^5$ | jeweils Alkyl mit 1 bis 12 C-Atomen, |
| | $R^6$ | Alkyl, Alkoxy oder Alkanoyloxy mit jeweils 1 bis 12 C-Atomen, |
| | m | 0 oder 1, |
| | Pyr | Pyrimidin-2,5-diyl oder Pyridin-2,5-diyl und |
| | $A^1$ | Phe oder Cy |

bedeutet und Cy und Phe die angegebenen Bedeutungen haben, und/oder

mindestens eine Komponente ausgewählt aus den Verbindungen der Formeln IVa und IVb

$R^7$-Dio-Phe-CN IVa

$R^7$-A°-Phe-NCS IVb

worin $R^7$ jeweils Alkyl mit 1 bis 12 C-Atomen,
Dio trans-1,3-Dioxan-2,5-diyl,
A° -Cy-, -Dio-, -Cy-Phe-, -Cy-Cy-,-Cy-Ph-CO-O- oder $-Cy-CH_2-CH_2-$ bedeutet,
und Dio, Cy und Phe die angegebenen Bedeutungen haben, enthält.

2. Flüssigkristallphase nach Anspruch 1, dadurch gekennzeichnet, daß die mindestens eine Komponente ausgewählt aus den Verbindungen der Formeln Va und Vb enthält

$R^8-Cy-(Phe)_n-CN$ Va

$R^8-Cy-Cy-(Phe)_n-CN$ Vb

| | | |
|---|---|---|
| worin | $R^8$ | jeweils Alkyl mit 1 bis 12 C-Atomen, |
| | n | 1 oder 2 bedeutet und |
| | Cy und Phe | jeweils die angegebenen Bedeutungen haben. |

3. Flüssigkristallphase nach Anspruch 1 oder 2, dadurch gekennzeichnet, daß sie mindestens eine Komponente der Formel VI enthält,

$R^9-Cy-A^1-Z-A^2-R^{10}$ VI

| | | |
|---|---|---|
| worin | $R^9$ | Alkyl mit 1 bis 12 C-Atomen, |
| | $R^{10}$ | Alkyl oder Alkoxy jeweils 1 bis 12 C-Atomen oder CN, |
| | $A^1$ und $A^2$ | jeweils Cy oder Phe und |
| | Z | -CO-O-, -O-CO- oder $-CH_2CH_2-$ |

bedeutet.

4. Flüssigkristallphase nach mindestens einem der Ansprüche 1 bis 3, dadurch gekennzeichnet, daß Alkyl, Alkoxy und Alkanoyloxy jeweils geradkettig sind.

5. Flüssigkristallphase nach mindestens einem der Ansprüche 1 bis 4, dadurch gekennzeichnet, daß Alkyl n-Akoxymethyl mit 2 bis 7 C-Atomen, n-Alkoxyethyl mit 2 bis 7 C-Atomen oder trans- Alkenyl mit 3 bis 7 C-Atomen bedeutet.

6. Flüssigkristallphase nach mindestens einem der Ansprüche 1 bis 5, dadurch gekennzeichnet, daß sie mindestens eine Verbindung der Formel I enthält, worin $R^2$ n-Alkoxy bedeutet.

7. Flüssigkristallphase nach mindestens einem der Ansprüche 1 bis 6, dadurch gekennzeichnet, daß sie 8 bis 23% an einer oder mehreren Komponenten der Formel I und 5 bis 35% an einer oder mehreren Komponenten der Formel II enthält.

8. Flüssigkristallphase nach mindestens einem der Ansprüche 1 bis 7, dadurch gekennzeichnet, daß sie mindestens eine Verbindung der Formel II enthält, worin A° trans-1,4-Cyclohexylen bedeutet.

9. Flüssigkristallphase nach Anspruch 8, dadurch gekennzeichnet, daß sie mindestens eine Verbindung der Formel II enthält, worin A° eine Einfachbindung bedeutet.

10. Flüssigkristallphase nach mindestens einem der Ansprüche 1 bis 9, dadurch gekennzeichnet, daß sie eine oder mehrere bevorzugte Verbindungen der Teilformeln IIa bis m enthält:

| | |
|---|---|
| $R^3$-Cy-Ph-Ph-$R^4$ | IIa |
| $R^3$-Cy-Cy-Phe-$R^4$ | IIb |
| $R^3$-Cy-Ph-Ph-Cy-$R^4$ | IIc |
| $R^3$-Cy-Phe-Ph-$R^4$ | IId |
| $R^3$-Cy-Phe-Ph-Cy-$R^4$ | IIe |
| $R^3-Cy-CH_2CH_2-Phe-Phe-R^4$ | IIf |
| $R^3-Cy-CH_2CH_2-Phe-Phe-CH_2CH_2-Cy-R^4$ | IIg |
| $R^3-Cy-CH_2CH_2-Phe-Phe-Cy-R^4$ | IIh |
| $R^3$-Cy-COO-Ph-Ph-$R^4$ | IIi |
| $R^3-Cy-CH_2CH_2-Phe-CH_2CH_2-Phe-Cy-R^4$ | IIj |
| $R^3-Cy-CH_2CH_2-Cy-Phe-R^4$ | IIk |
| $R^3-Cy-CH_2CH_2-Cy-Phe-Cy-R^4$ | II*l* |
| $R^3$-C-Phe-COO-Phe-Cy-$R^4$ | IIm |

11. Flüssigkristallphase nach mindestens einem der Ansprüche 1 bis 10, dadurch gekennzeichnet, daß sie eine oder mehrere bevorzugte Verbindungen der Teilformeln III aa, III ab, III ba, III bb und III bc enthält:

| | |
|---|---|
| $R^5$-Pyr-Phe-$R^6$ | IIIaa |
| $R^5$-Cy-Pyr-Phe-$R^6$ | IIIab |
| $R^5$-Cy-Pyr-$R^6$ | IIIba |
| $R^5$-Cy-Phe-Pyr-$R^6$ | IIIbb |
| $R^5$-Cy-Cy-Pyr-$R^6$ | IIIbc |

12. Flüssigkristallphase nach mindestens einem der Ansprüche 1 bis 11, dadurch gekennzeichnet, daß die Verhältnisse der Gewichtsanteile der Komponenten der Formeln I bis IV in den im folgenden angegebenen Bereichen liegen:

I : II = 0,63 - 1,53
I : III = 0,67 - 0,82
I : IV = 0,71 - 1,64
II : III = 0,45 - 1,25
II : IV = 0,48 - 2,50
III : IV = 0,90 - 2,35

13. Verwendung von Flüssigkristallphasen nach einem der Ansprüche 1 bis 12 für hoch multiplexierbare elektrooptische Anzeigeelemente.

14. Elektrooptisches Anzeigeelement für Multiplexbetrieb, dadurch gekennzeichnet, daß es eine Phase nach einem der Ansprüche 1 bis 12 enthält.

**Claims:**

1. A liquid-crystal phase, which comprises at least one component of the formula I

$R^1$-Cy-Ph-$R^2$ I

wherein $R^1$ is alkyl having 1 to 12 C atoms,
$R^2$ is alkyl, alkoxy or alkanoyloxy each having 1 to 12 C atoms,
Cy is trans-1,4-cyclohexylene and
Ph is 1,4-phenylene,

at least one component of the formula II

$R^3$-Cy-$Z^1$-Q-$Z^2$-Phe-$A^o$-$R^4$ II

wherein $R^3$ and $R^4$ are each alkyl having 1 to 12 C atoms,
Cy is trans-1,4-cyclohexylene,
$Z^1$ and $Z^2$ independently of one another are each -CO-O-, -O-CO-, -$CH_2CH_2$- or a single bond,
Q is Phe or Cy,
$A^o$ is trans-1,4-cyclohexylene, trans-1,3-dioxane-2,5-diyl or a single bond and
Phe is 1,4-phenylene which is either unsubstituted or monosubstituted by fluorine,

at least one component selected from the compounds of the formulae IIIa and IIIb

$R^5$-$(Cy)_m$-Pyr-Phe-$R^6$ IIIa

$R^5$-$(Cy)_m$-$A^1$-Pyr-$R^6$ IIIb

wherein $R^5$ in each case is alkyl having 1 to 12 C atoms,
$R^6$ is alkyl, alkoxy or alkanoyloxy each having 1 to 12 C atoms,
m is 0 or 1,
Pyr is pyrimidine-2,5-diyl or pyridine-2,5-diyl and
$A^1$ is Phe or Cy and
Cy and Phe have the meanings given, and/or

at least one component selected from the compounds of the formulae IVa and IVb

$R^7$-Dio-Phe-CN IVa

$R^7$-$A^o$-Phe-NCS IVb

wherein
$R^7$ in each case is alkyl having 1 to 12 C atoms,
Dio is trans-1,3-dioxane-2,5-diyl,
$A^o$ is -Cy-, -Dio-, -Cy-Phe-, -Cy-Cy-, -Cy-Ph-CO-O- or -Cy-$CH_2$-$CH_2$- and
Dio, Cy and Phe have the meanings given.

2. A liquid-crystal phase as claimed in claim 1, which comprises at least one component selected from the compounds of the formulae Va and Vb

$R^8$-Cy-$(Phe)_n$-CN Va
$R^8$-Cy-Cy-$(Phe)_n$-CN Vb

wherein $R^8$ in each case is alkyl having 1 to 12 C atoms,
n is 1 or 2 and
Cy and Phe each have the meanings given.

3. A liquid-crystal phase as claimed in claim 1 or 2, which comprises at least one component of the formula VI

$R^9$-Cy-$A^1$-Z-$A^2$-$R^{10}$ VI

wherein $R^9$ is alkyl having 1 to 12 C atoms,
$R^{10}$ is alkyl or alkoxy each having 1 to 12 C atoms or CN,
$A^1$ and $A^2$ are each Cy or Phe and
Z is -CO-O-, -O-CO- or -$CH_2CH_2$-.

4. A liquid-crystal phase as claimed in at least one of claims 1 to 3, characterized in that alkyl, alkoxy and alkanoyloxy are each straight-chained.

5. A liquid-crystal phase as claimed in at least one of claims 1 to 4, characterized in that alkyl denotes n-alkoxymethyl with 2 to 7 C atoms, n-alkoxyethyl with 2 to 7 C atoms or trans-alkenyl with 3 to C atoms.

6. A liquid-crystal phase as claimed in at least one of claims 1 to 5, characterized in that it contains at least one compound of formula I wherein $R^2$ denotes n-alkoxy.

7. A liquid-crystal phase as claimed in at least one of claims 1 to 6, characterized in that it contains 8 to 23% of on more components of formula I and 5 to 35% of one or more components of formula II.

8. A liquid-crystal phase as claimed in at least one of claims 1 to 7, characterized in that it contains at least one compound of formula II, wherein $A^o$ denotes trans-1,4-cyclohexylene.

9. A liquid-crystal phase as claimed in claim 8, characterized in that it contains at least one compound of formula II, wherein $A^o$ denotes a single bond.

10. A liquid-crystal phase as claimed in at least one of claims 1 to 9, characterized in that it contains one or more preferred compounds of the part formulae IIa to m:

$R^3$-Cy-Ph-Ph-$R^4$ IIa
$R^3$-Cy-Cy-Phe-$R^4$ IIb
$R^3$-Cy-Ph-Ph-Cy-$R^4$ IIc
$R^3$-Cy-Phe-Ph-$R^4$ IId
$R^3$-Cy-Phe-Ph-Cy-$R^4$ IIe
$R^3$-Cy-$CH_2CH_2$-Phe-Phe-$R^4$ IIf

$R^3$-Cy-$CH_2CH_2$-Phe-Phe-$CH_2CH_2$-Cy-$R^4$ IIg
$R^3$-Cy-$CH_2CH_2$-Phe-Phe-Cy-$R^4$ IIh
$R^3$-Cy-COO-Ph-Ph-$R^4$ IIi
$R^3$-Cy-$CH_2CH_2$-Phe-$CH_2CH_2$-Phe-Cy-$R^4$ IIj
$R^3$-Cy-$CH_2CH_2$-Cy-Phe-$R^4$ IIk
$R^3$-Cy-$CH_2CH_2$-Cy-Phe-Cy-$R^4$ II*l*
$R^3$-C-Phe-COO-Phe-Cy-$R^4$ IIm

11. A liquid-crystal phase as claimed in at least one of claims 1 to 10, characterized in that it contains one or more preferred compounds of the part formulae IIIaa, IIIab, IIIba, IIIbb, and IIIbc:

$R^5$-Pyr-Phe-$R^6$ IIIaa
$R^5$-Cy-Pyr-Phe-$R^6$ IIIab
$R^5$-Cy-Pyr-$R^6$ IIIba
$R^5$-Cy-Phe-Pyr-$R^6$ IIIbb
$R^5$-Cy-Cy-Pyr-$R^6$ IIIbc

12. A liquid-crystal phase as claimed in at least one of claims 1 to 11, characterized in that the ratios of the weight fractions of the components of the formulae I to IV are within the ranges given below:

I : II = 0,63 - 1,53
I : III = 0,67 - 0,82
I : IV = 0,71 - 1,64
II : III = 0,45 - 1,25
II : IV = 0,48 - 2,50
III : IV = 0,90 - 2,35

13. The use of liquid-crystal phases as claimed in any of claims 1 to 12 for electro-optical display elements of high multiplexing capacity.

14. An electro-optical display element for multiplex operation, which contains a phase as claimed in any of claims 1 to 12.

**Revendications**

1. Phase à cristaux liquides, caractérisée en ce qu'elle contient au moins un composant de formule I

$R^1$-Cy-Ph-$R^2$ I

dans laquelle
$R^1$ représente un groupe alkyle en C 1-C 12,
$R^2$ représente un groupe alkyle, alcoxy ou alcanoyloxy contenant chacun 1 à 12 atomes de carbone,
Cy représente le groupe trans-1,4-cyclohexylène, et
Ph représente le groupe 1,4-phénylène,

au moins un composant de formule II

$R^3$-Cy-$Z^1$-Q-$Z^2$-Phe-$A^o$-$R^4$ II

dans laquelle
$R^3$ et $R^4$ représentent chacun un groupe alkyle en C 1-C 12,
Cy représente le groupe trans-1,4-cyclohexylène,
$Z^1$ und $Z^2$ représentent chacun, indépendamment l'un de l'autre, -CO-O-, -O-CO-, -$CH_2CH_2$- ou une liaison simple,
Q représente Phe ou Cy,
$A^o$ représente un groupe trans-1,4-cyclohexylène, trans-1,3-dioxanne-2,5-diyle ou une liaison simple, et
Phe représente dans chaque cas un groupe 1,4-phénylène non substitué ou substitué par un atome de fluor,

au moins un composant choisi parmi les composés de formules IIIa et IIIb

$R^5$-$(Cy)_m$-Pyr-Phe-$R^6$ IIIa

$R^5$-$(Cy)_m$-$A^1$-Pyr-$R^6$ IIIb

dans lequelles
le symbole $R^5$ représente dans chaque cas un groupe alkyle en C1-C 12,
le symbole $R^6$ représente dans chaque cas un groupe alkyle, alcoxy ou alcanoyloxy contenant chacun 1 à 12 atomes de carbone,
m est égal à 0 ou 1,
Pyr représente un groupe pyrimidine-2,5-diyle ou pyridine-2,5-diyle, et
$A^1$ représente Phe ou Cy, ces derniers ayant les significations indiquées ci-dessus et/ou

au moins un composant choisi parmi les composés de formules IVa et IVb

$R^7$-Dio-Phe-CN IVa

$R^7$-$A^o$-Phe-NCS IVb

dans les quelles
$R^7$ représente dans chaque cas un groupe alkyle en C 1-C 12,
Dio représente un groupe trans-1,3-dioxanne-2,5-diyle,
$A^o$ représente -Cy-, -Dio-, -Cy-Phe-, -Cy-Cy-,-Cy-Ph-CO-O- ou -Cy-$CH_2$-$CH_2$- et,

Dio, Cy et Phe ont les significations indiquées ci-dessus.

2. Phase à cristaux liquides selon la revendication 1, caractérisée en ce qu'elle contient au moins un composant choisi parmi les composés de formules Va et Vb

$R^8$-Cy-$(Phe)_n$-CN Va

$R^8$-Cy-Cy-$(Phe)_n$-CN Vb

dans lesquelles
$R^8$ représente dans chaque cas un groupe alkyle en C 1-C 12,
n est égal à 1 ou 2, et
Cy et Phe ont les significations indiquées ci-dessus.

3. Phase a cristaux liquides selon la revendication 1 ou 2, caractérisée in ce qu'elle contient au moins un composant de formule VI

$R^9$-Cy-$A^1$-Z-$A^2$-$R^{10}$ VI

dans laquelle

$R^9$ représente un groupe alkyle en C 1-C 12,

$R^{10}$ représente un groupe alkyle ou alcoxy contenant chacun 1 à 12 atomes de carbone ou le groupe CN,

$A^1$ et $A^2$ représentent chacun Cy ou Phe, et

Z représente -CO-O-, -O-CO- ou $-CH_2CH_2-$.

4. Phase à cristaux liquides selon au moins une des revendications 1 à 3, caractérisée en ce que les groupes alkyle, alcoxy et alcanoyloxy sont tous à chaîne droite.

5. Phase à cristaux liquides selon au moins une des revendications 1 à 4, caractérisée en ce que les groupes alkyle sont des groupes n-alcoxyméthyle en C 2-C 7, n-alcoxyéthyle en C 2-C 7 ou trans-alcényle en C 3-C 7.

6. Phase à cristaux liquides selon au moins une des revendications 1 à 5, caractérisée en ce qu'elle contient au moins un composé de formule I dans laquelle $R^2$ représente un groupe n-alcoxy.

7. Phase à cristaux liquides selon au moins une des revendications 1 à 6, caractérisée en ce qu'elle contient de 8 à 23% d'un ou plusieurs composants de formule I et de 5 à 35% d'un ou plusieurs composants de formule II.

8. Phase à cristaux liquides selon au moins une des revendications 1 à 7, caractérisée en ce qu'elle contient au moins un composé de formule II dans laquelle $A^o$ représente le groupe trans-1,4-cyclohexylène.

9. Phase à cristaux liquides selon la revendication 8, caractérisée en ce qu'elle contient au moins un composé de formule II dans laquelle $A^o$ représente une liaison simple.

10. Phase à cristaux liquides selon au moins une des revendications 1 à 9, caractérisée en ce qu'elle contient un ou plusieurs composés préférés répondant aux formules partielles IIa à m:

$R^3$-Cy-Ph-Ph-$R^4$ IIa

$R^3$-Cy-Cy-Phe-$R^4$ IIb

$R^3$-Cy-Ph-Ph-Cy-$R^4$ IIc

$R^3$-Cy-Phe-Ph-$R^4$ IId

$R^3$-Cy-Phe-Ph-Cy-$R^4$ IIe

$R^3$-Cy-$CH_2CH_2$-Phe-Phe-$R^4$ IIf

$R^3$-Cy-$CH_2CH_2$-Phe-Phe-$CH_2CH_2$-Cy-$R^4$ IIg

$R^3$-Cy-$CH_2CH_2$-Phe-Phe-Cy-$R^4$ IIh

$R^3$-Cy-COO-Ph-Ph-$R^4$ IIi

$R^3$-Cy-$CH_2CH_2$-Phe-$CH_2CH_2$-Phe-Cy-$R^4$ IIj

$R^3$-Cy-$CH_2CH_2$-Cy-Phe-$R^4$ IIk

$R^3$-Cy-$CH_2CH_2$-Cy-Phe-Cy-$R^4$ II*l*

$R^3$-C-Phe-COO-Phe-Cy-$R^4$ IIm

11. Phase à cristaux liquides selon au moins une des revendications 1 à 10, caractérisée en ce quelle contient un ou plusieurs composés préférés répondant aux formules partielle IIIaa, IIIab, IIIba, IIIbb et IIIbc:

$R^5$-Pyr-Phe-$R^6$ IIIaa

$R^5$-Cy-Pyr-Phe-$R^6$ IIIab

$R^5$-Cy-Pyr-$R^6$ IIIba

$R^5$-Cy-Phe-Pyr-$R^6$ IIIbb

$R^5$-Cy-Cy-Pyr-$R^6$ IIIbc

12. Phase à cristaux liquides selon au moins une des revendications 1 à 11, caractérisée en ce que les proportions relatives en poids entre les composants de formules I à IV se situent dans les domaines suivants:

I : II = 0,63 - 1,53
I : III = 0,67 - 0,82
I : IV = 0,71 - 1,64
II : III = 0,45 - 1,25
II : IV = 0,48 - 2,50
III : IV = 0,90 - 2,35

13. Utilisation des phases à cristaux liquides selon l'une des revendications 1 à 12, pour des éléments d'affichage électro-optiques à haute aptitude au fonctionnement multiplex.

14. Elément d'affichage électro-optique pour le fonctionnement en multiplex, caractérisé en ce qu'il contient une phase selon l'une des revendications 1 à 12.